**Europäisches Patentamt**

**European Patent Office**

**Office européen des brevets**

(11) Veröffentlichungsnummer: **0 321 787**

**A2**

(12) # EUROPÄISCHE PATENTANMELDUNG

(21) Anmeldenummer: **88120495.2**

(22) Anmeldetag: **08.12.88**

(51) Int. Cl.⁴: **G02B 6/44**

(30) Priorität: **23.12.87 DE 3743802**

(43) Veröffentlichungstag der Anmeldung:
**28.06.89 Patentblatt 89/26**

(84) Benannte Vertragsstaaten:
**BE DE FR GB NL**

(71) Anmelder: **Standard Elektrik Lorenz Aktiengesellschaft**
**Lorenzstrasse 10**
**D-7000 Stuttgart 40(DE)**

(84) **DE**

Anmelder: **ALCATEL N.V.**
**Strawinskylaan 341 (World Trade Center)**
**NL-1077 XX Amsterdam(NL)**

(84) **BE FR GB NL**

(72) Erfinder: **Braunmiller, Michael**
**Steinäcker 18**
**D-7000 Stuttgart 75(DE)**
Erfinder: **Grögl, Ferdinand**
**Dürrenstrasse 42**
**D-7141 Oberstenfeld(DE)**
Erfinder: **Klett, Thomas**
**Im Gigis 10**
**D-7141 Murr(DE)**

(74) Vertreter: **Graf, Georg Hugo, Dipl.-Ing. et al**
**Standard Elektrik Lorenz AG Patent- und**
**Lizenzwesen Postfach 30 09 29**
**D-7000 Stuttgart 30(DE)**

(54) Optisches Kabelelement, Bündelader und optisches Kabel.

(57) Es ist ein optisches Kabelelement (5) beschrieben, bei dem mehrere optische Fasern (1) konzentrisch um einen zentralen Faden (3) angeordnet und von einer gemeinsamen Hülle (4) umgeben sind. Die Hülle (4) besteht aus einem Kunststoff, der an den optischen Fasern (1) haftet, so daß nach Aufschlitzen des Kabelelements (5) entlang seiner Längsachse im aufgeschlitzten Bereich das runde Kabelelement in ein bändchenförmiges überführbar ist. Mit dem bändchenförmigen Kabelelement sind in einfacher Weise Vielfachspleißungen durchführbar.

Es sind ferner eine Bündelader sowie optische Kabel beschrieben, die mehrere derartige Kabelelemente enthalten.

Fig 1

0,75 mm

## Optisches Kabelelement, Bündelader und optisches Kabel

Die Erfindung bezieht sich gemäß dem Oberbegriff des Hauptanspruchs auf ein optisches Kabelelement, das mehrere optische Fasern aufweist, und auf Bündeladern und optische Kabel, die mindestens ein derartiges optisches Kabelelement enthalten.

Optische Kabel mit einer Bündelader, die mehrere Kabelelemente enthält, werden von der Firma AT&T hergestellt (AT&T Marketing Communications 2122B, August 1985). Ein Kabelelement weist 4 bis 12 optische Fasern auf, die durch eine farbige Wendel zusammengehalten werden. Mehrere Kabelelemente und ein Rohr, das die Kabelelemente lose umgibt, bilden eine Bündelader. Die Bündelader ist mit einer Füllmasse gefüllt. Auf die Bündelader ist direkt ein zugfester Kabelmantel aufgebracht.

Diese Art der Zusammenfassung der einzelnen optischen Fasern zu Kabelelementen ermöglicht Bündeladern mit hohen Faserpackungsdichten, erfordert aber beim Spleißen besondere Aufmerksamkeit, um nicht die Fasern der verschiedenen Kabelelemente durcheinanderzubringen. Bei den oben beschriebenen Kabeln ist eine Zuordnung einer einzelnen optischen Faser zu einem bestimmten Kabelelement an einem Kabelende kaum möglich, da beim Entfernen des Rohres die Wendeln aufgehen und alle optischen Fasern durcheinandergeraten.

Der Erfindung liegt die Aufgabe zugrunde, ein optisches Kabelelement auszugeben, bei dem in einfacher Weise Vielfachspleißungen durchgeführt werden können.

Die Lösung dieser Aufgabe erfolgt mit den im Hauptanspruch genannten Mitteln. Vorteilhafte Weiterbildungen sind in den Unteransprüchen enthalten.

Die Erfindung hat den Vorteil, daß durch Aufreißen der Kunststoffhülle mit Hilfe eines Reißfadens aus dem runden Kabelelement ein bändchenförmiges Kabelelement entsteht, das Vielfachspleißungen ermöglicht. Ferner ist eine Einfärbung der optischen Fasern nicht notwendig, da jede einzelne optische Faser durch ihre Position auf dem Bändchen identifiziert werden kann.

Die Erfindung wird nachstehend anhand mehrerer Ausführungsbeispiele erläutert. Es zeigt

Fig.1 ein optisches Kabelelement mit fünf optischen Fasern und einem Reißfaden;

Fig. 2 ein optisches Kabelelement mit zehn optischen Fasern und einem Reißfaden;

Fig.3 eine Bündelader mit fünf optischen Kabelelementen.

Weitere Ausführungen sind in der Beschreibung enthalten.

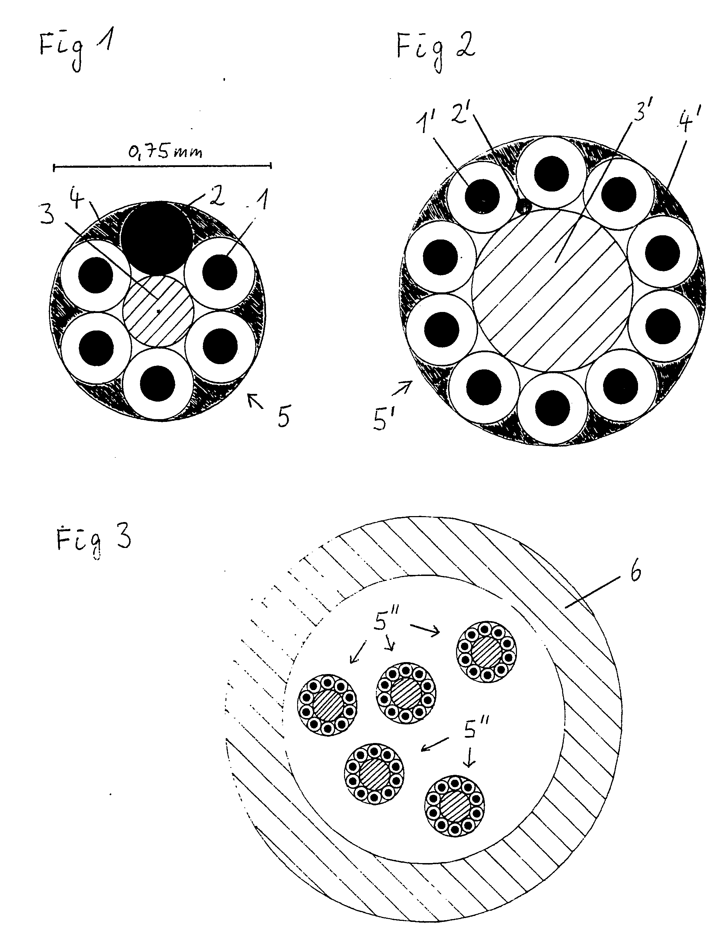

Gemäß Fig. 1 weist ein erstes optisches Kabelelement 5 fünf optische Fasern 1 und einen Reißfaden 2 auf, die konzentrisch um einen zentralen Faden 3 angeordnet sind. Auf die optischen Fasern 1 und den Reißfaden 2 ist eine Hülle 4 aus Kunststoff aufgebracht.

Gemäß Figur 2 weist ein zweites optisches Kabelelement 5' zehn optische Fasern 1' auf, die konzentrisch um den zentralen Faden 3' angeordnet sind. In einem Zwickel zwischen zwei optischen Fasern 1' und dem zentralen Faden 3' befindet sich der Reißfaden 2'. Auf die optischen Fasern 1' ist die Hülle 4' aus Kunststoff aufgebracht. Bei einer anderen Ausführung ist der Reißfaden direkt unter der Hülle zwischen zwei optischen Fasern angeordnet.

Figur 3 zeigt eine Bündelader, die aus einem Rohr 6 und fünf optischen Kabelelementen 5" besteht. Diese unterscheiden sich von den bei Figur 2 beschriebenen nur durch Weglassen des Reißfadens. Da bei fehlendem Reißfaden die Stelle, an der das Kabelelement 5" aufgetrennt wird, nicht mehr vorherbestimmbar ist, können die Fasern nicht mehr anhand ihrer Position auf dem Bändchen identifiziert werden sondern müssen unterschiedlich eingefärbt sein. Die Kabelelemente 5" sind lose von dem Rohr 6 umgeben. Das Innere des Rohres 6 kann mit einer Füllmasse gefüllt sein.

Bei den oben beschriebenen optischen Kabelelementen besteht der zentrale Faden 3, 3' vorzugsweise aus glasfaserverstärktem Kunststoff. Damit die Kabelelemente längswasserdicht sind, kann der zentrale Faden mit einer gallertartigen Masse beschichtet sein. Die Dicke der Beschichtung und damit die Menge der gallertartigen Masse ist so gewählt, daß sie zum Ausfüllen der Zwickel zwischen den optischen Fasern und dem zentralen Faden ausreicht. Die zentralen Fäden verschiedener Kabelelemente können unterschiedlich eingefärbt sein.

Der Reißfaden 2, 2' besteht aus einer Glas- oder Aramidfaser.

Die Hülle 4,4' besteht aus einem thermoplastischen Elastomer (beispielsweise Pebax der Fa. ATO Chemicals), einem bei Raumtemperatur vulkanisierenden Silikonkautschuk (beispielsweise Sylgard der Fa. Dow Corning), einem UV-vernetzbaren Polymer (beispielsweise einem Polyurethanacrylat) oder einem weichen Thermoplasten (beispielsweise einem Polyäthylencopolymer).

Alle oben genannten Materialien für die Hülle 4, 4' sind so ausgewählt, daß die optischen Fasern 1,1' an der Hülle haften, so daß auch nach einem Aufschlitzen der Hülle mit Hilfe des Reißfadens die optischen Fasern nicht durcheinandergeraten, sondern aus dem runden Kabelelement 5, 5', 5" ein bändchenförmiges entsteht.

Die oben beschriebenen Bündeladern sind bei hoher Packungsdichte der optischen Fasern in optischen Kabeln praktisch beliebigen Aufbaus verwendbar. Beispielsweise kann direkt auf ein Rohr ein zugfester Kabelmantel aufgebracht sein. Mehrere Rohre können auch um ein zugfestes Zentralelement angeordnet und gemeinsam von einem Kabelmantel umgeben sein, der dann nicht zugfest zu sein braucht.

**Ansprüche**

1. Optisches Kabelelement mit mehreren optischen Fasern, **dadurch gekennzeichnet,** daß die optischen Fasern (1) konzentrisch um einen zentralen Faden (3) angeordnet sind und daß über die optischen Fasern (1) eine Hülle (4) aus Kunststoff aufgebracht ist, die an den optischen Fasern (1) haftet, derart, daß nach einem Aufschlitzen des Kabelelements entlang seiner Längsachse das runde Kabelelement im aufgeschlitzten Bereich in ein bändchenförmiges Kabelelement überführbar ist.

2. Optisches Kabelelement nach Anspruch 1, dadurch gekennzeichnet, daß die Hülle (4) aus einem thermoplastischen Elastomer, einem weichen Thermoplasten oder einem thermisch oder UV-vernetzbaren Polymer besteht.

3. Optisches Kabelelement nach Anspruch 2, dadurch gekennzeichnet, daß die Hülle (4) aus einem Polyetherblockamid, einem Polyurethan, einem Polyolefinelastomer, einem Silikonkautschuk oder einem Acrylatharz besteht.

4. Optisches Kabelelement nach Anspruch 1, 2 oder 3, dadurch gekennzeichnet, daß die Zwischenräume zwischen den optischen Fasern und dem zentralen Faden mit einer Füllmasse gefüllt sind.

5. Optisches Kabelelement nach einem der Ansprüche 1 bis 4, dadurch gekennzeichnet, daß anstelle einer optischen Faser ein Reißfaden vorhanden ist, der im wesentlichen denselben Durchmesser wie die optischen Fasern besitzt.

6. Optisches Kabelelement nach einem der Ansprüche 1 bis 4, dadurch gekennzeichnet, daß es einen Reißfaden enthält, dessen Durchmesser wesentlich kleiner als der Durchmesser der optischen Fasern ist.

7. Optisches Kabelelement nach Anspruch 5 oder 6, dadurch gekennzeichnet, daß der Reißfaden eine Glas- oder Aramidfaser ist.

8. Bündelader, enthaltend mindestens ein optisches Kabelelement nach einem der vorhergehenden Ansprüche.

9. Optisches Kabel, enthaltend mindestens eine Bündelader nach Anspruch 8.

10. Optisches Kabel nach Anspruch 9, dadurch gekennzeichnet, daß mehrere Bündeladern konzentrisch um ein Zentralelement angeordnet sind.

Fig 1

0,75 mm

Fig 2

Fig 3